# EUROPÄISCHE PATENTSCHRIFT

(11) **EP 4 548 053 B1**
(45) Veröffentlichungstag und Bekanntmachung des Hinweises auf die Patenterteilung: **20.05.2026**
(21) Anmeldenummer: 23733948.6
(22) Anmeldetag: 20.06.2023
(51) Int. Cl.: G01G 19/08, G01G 19/414, G01G 19/62

(54) **SYSTEM UND VERFAHREN ZUR DETEKTION VON VERLORENEM LADUNGSGUT**
SYSTEM AND METHOD FOR DETECTING LOST CARGO
SYSTÈME ET PROCÉDÉ DE DÉTECTION DE MARCHANDISES PERDUES

(30) Priorität: 01.07.2022 DE 102022116543
(43) Veröffentlichungstag der Anmeldung: 07.05.2025
(73) Patentinhaber: Daimler Truck AG, 70771 Leinfelden-Echterdingen (DE)
(72) Erfinder: OBERFELL, Ralf, 70771 Leinfelden-Echterdingen (DE); KOK, Wilhelmus, 70771 Leinfelden-Echterdingen (DE); BOOTZ, Christian, 70372 Stuttgart (DE)
(74) Vertreter: JENSEN & SON
(86) Internationale Anmeldenummer: PCT/EP2023/066522
(87) Internationale Veröffentlichungsnummer: WO 2024/002768

(56) Entgegenhaltungen:
- CN-A- 114 414 017
- US-A1- 2022 073 030
- US-B1- 6 236 911

## Beschreibung

Die Erfindung betrifft ein Verfahren zur Detektion von verlorenem Ladungsgut gemäß dem Oberbegriff des Anspruchs 1 sowie ein System zur Detektion von verlorenem Ladungsgut gemäß dem Oberbegriff des Anspruchs 9.

Die Detektion von verlorener Ladung (Lost Cargo) ist insbesondere für hochautomatisierte Kraftfahrzeuge eine große Herausforderung. Für die Umfeldsensorik (beispielsweise Radar, Kamera, Lidar, Ultraschall, ...) des Kraftfahrzeugs ist es aufgrund der geringen Ausmaße verlorener Objekte schwer, diese zu erkennen und von der Umgebung zu unterscheiden.

DE 10 2021 000 241 A1 beschreibt ein Verfahren zur Erkennung eines Verlusts von Ladung eines Fahrzeugs, wobei ein Ladungsverlust durch Überwachung eines Beladungszustands des Fahrzeugs festgestellt wird und der Ladungsverlust zusätzlich durch Auswerten wenigstens eines Sensorsignals wenigstens eines einen Heckbereich des Fahrzeugs überwachenden Sensors plausibilisiert wird. Der Beladungszustand des Fahrzeugs wird durch Auswerten eines Einfederzustands einer Federung des Fahrzeugs mittels wenigstens eines Federwegsensors überwacht und bei der Plausibilisierung einer verlorenen Ladung wird eine Höhenposition der verlorenen Ladung berücksichtigt.

Weiteren Stand der Technik stellen die Patentschriften US 2022 / 073 030 A1 und US 6 236 911 B1 dar.

Der Erfindung liegt die Aufgabe zu Grunde, ein neuartiges Verfahren und ein neuartiges System zur Detektion von mittels eines Fahrzeugs transportiertem, verlorenem Ladungsgut anzugeben.

Die Aufgabe wird erfindungsgemäß gelöst durch ein Verfahren mit den Merkmalen des Anspruchs 1 und durch ein System mit den Merkmalen des Anspruchs 9.

Vorteilhafte Ausgestaltungen der Erfindung sind Gegenstand der Unteransprüche.

Bei einem erfindungsgemäßen Verfahren zur Detektion von mittels eines Fahrzeugs transportiertem, verlorenem Ladungsgut wird der Beladungszustand des Fahrzeugs überwacht, wobei eine von dem Fahrzeug zurückzulegende Wegstrecke in mehrere, sich an jeweiligen Streckenübergabepunkten übergangslos aneinander anschließende Sektionen unterteilt wird, wobei bei jedem Streckenübergabepunkt eine Steuereinheit aktiviert wird, die ein Fahrzeuggewicht und separat das Gewicht der vom Fahrzeug verbrauchten Betriebsstoffe ermittelt, wobei eine Differenz aus dem Fahrzeuggewicht des vorherigen Streckenübergabepunkts, dem Fahrzeuggewicht des aktuellen Streckenübergabepunkts und dem Gewicht der verbrauchten Betriebsstoffe gebildet wird, wobei ein Verlust von Ladegut erkannt und die zugehörige Sektion identifiziert wird, wenn die Differenz größer ist als ein vorbestimmter Schwellwert.

Die erfindungsgemäße Lösung ermöglicht eine Erhöhung der Verkehrssicherheit durch Ermittlung verlorener Ladung.

Ausführungsbeispiele der Erfindung werden im Folgenden anhand von Zeichnungen näher erläutert.

Dabei zeigen:
- Fig. 1: eine schematische Ansicht zur Veranschaulichung des Verfahrens zur Auffindung von mittels Fahrzeugen transportiertem Ladungsgut, und
- Fig. 2: eine schematische Ansicht zur Veranschaulichung eines Algorithmus, der in einer Steuereinheit durchgeführt wird.

Einander entsprechende Teile sind in allen Figuren mit den gleichen Bezugszeichen versehen.

Die vorliegende Erfindung betrifft ein System und ein Verfahren zur Auffindung von mittels Fahrzeugen transportiertem Ladungsgut, das auf der Fahrt verloren geht.

Um den Verlust auch bei kleinteiligem Ladungsgut verlässlich ermitteln zu können, wird erfindungsgemäß vorgeschlagen, dass die zurückzulegende Wegstrecke in mehrere, sich übergangslos aneinander anschließende Streckenabschnitte eingeteilt wird, wobei bei jedem Streckenübergabepunkt eine Steuereinheit aktiviert wird, die eine Wägung des Fahrzeuggewichts und in einer separaten Wägung das Gewicht der Betriebsstoffe einleitet, wonach die erfassten Gewichtsdaten in einem Computer voneinander subtrahiert werden, wonach die subtrahierten Ergebnisse aufeinanderfolgender Übergabepunkte miteinander verglichen werden und bei Überschreiten eines aus dieser Differenz hervorgehenden vorbestimmten Schwellwertes ein Verlust von Ladegut erkannt und der zugehörige Streckenabschnitt identifiziert wird.

In einer Ausführungsform wird die Einteilung in Streckenabschnitte manuell von einem Fahrer oder einem Flottenverantwortlichen vorgenommen.

In einer Ausführungsform wird die Einteilung in Streckenabschnitte durch ein mit einem entsprechenden Logistikprogramm ausgestattetes Backend, beispielsweise eine Cloud, oder durch ein Frontend, beispielsweise einen Bordcomputer, vorgenommen.

In einer Ausführungsform kommuniziert das Backend oder das Frontend mit der Steuereinheit zur Ausführung des Wägevorgangs.

In einer Ausführungsform erfolgt die Einteilung in Streckenabschnitte in Abhängigkeit von einer Topographie, einem Streckenverlauf und/oder einer aktuellen Verkehrssituation.

In einer Ausführungsform wird das Fahrzeuggewicht in jeweiligen externen Stationen gemessen.

In einer Ausführungsform erfolgt die Ermittlung des Fahrzeuggewichts mittels einer fahrzeugeigenen Messung (onboard).

In einer Ausführungsform werden die Ergebnisse an ein übergeordnetes Control-Center gesendet.

In einer Ausführungsform wird bei Überschreiten des Schwellwertes eine Warnung an das Control-Center und/oder den Fahrer gesendet.

In einer Ausführungsform werden vom Control-Center Maßnahmen zur Regelung des Verkehrs auf dem jeweiligen identifizierten Streckenabschnitt und zur Bergung des Ladeguts eingeleitet.

In einer Ausführungsform werden zur Regelung des Verkehrs Ampeln auf dem Streckenabschnitt angesteuert und/oder den Streckenabschnitt passierende Fahrzeuge vor der Gefahr herumliegenden Ladeguts gewarnt.

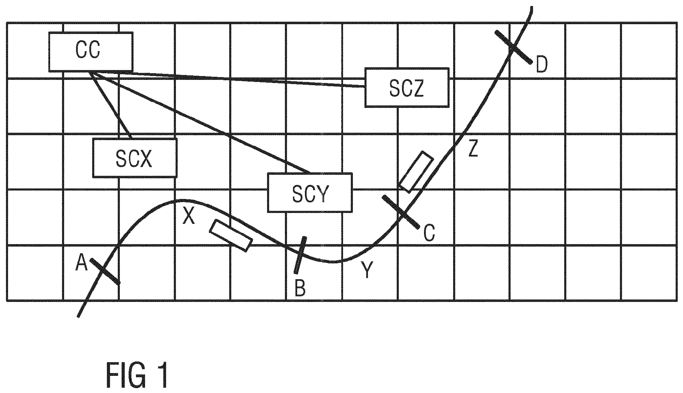

Figur 1 ist eine schematische Ansicht zur Veranschaulichung des Verfahrens zur Detektion von mittels eines Fahrzeugs transportiertem, verlorenem Ladungsgut.

Eine Wegstrecke, die ein Kraftfahrzeug zurücklegt, wird in Sektionen X, Y, Z unterteilt. Im gezeigten Ausführungsbeispiel sind drei Sektionen X, Y, Z dargestellt. In anderen Beispielen kann eine beliebige andere Anzahl von Sektionen X, Y, Z vorgesehen sein. Jede Sektion X, Y, Z weist einen Beginn und ein Ende auf. Im vorliegenden Beispiel ist der Beginn der Sektion X ein Streckenübergabepunkt A. Das Ende der Sektion X und damit der Beginn der Sektion Y ist ein Streckenübergabepunkt B. Das Ende der Sektion Y und damit der Beginn der Sektion Z ist ein Streckenübergabepunkt C. Das Ende der Sektion Z ist ein Streckenübergabepunkt D.

Für jede Sektion X, Y, Z ist eine Steuereinheit SCX, SCY, SCZ vorgesehen, auf der ein Algorithmus ausgeführt wird, dessen Berechnungsergebnis nach Ermittlung an eine übergeordnete Steuerzentrale CC gesendet wird.

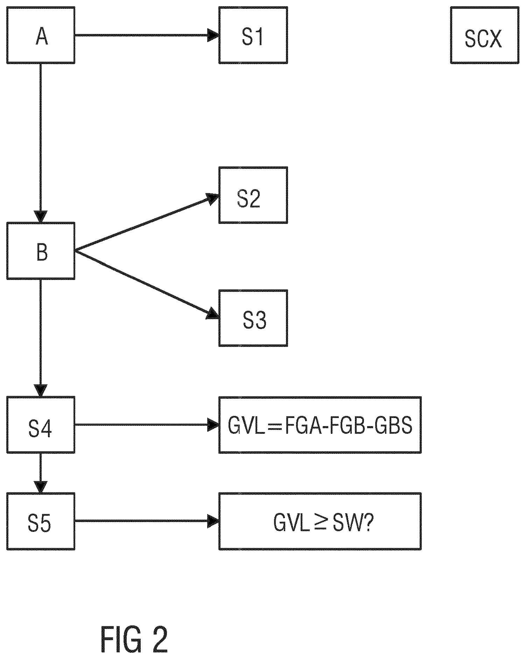

Figur 2 ist eine schematische Ansicht zur Veranschaulichung des Algorithmus, der beispielsweise in der Steuereinheit SCX durchgeführt wird. Passiert ein Fahrzeug den Streckenübergabepunkt A, so wird an diesem Streckenübergabepunkt A in einem Schritt S1 das Fahrzeuggewicht FGA und/oder die Fahrzeugmasse des Fahrzeugs ermittelt. Dies kann entweder durch eine Wägestation (Weigh Station), also offline, oder online im Fahrzeug durch eine Software zur Gewichtsermittlung erfolgen (beispielsweise beschrieben in https://automobilkonstruktion.industrie.de/elektronik-software/softwareloesung-von-fev-zur-gewichtsermittlung-bei-fahrzeugen/, abgerufen am 25. September 2020. Die Fundstelle wird hiermit vollumfänglich durch Verweis in die vorliegende Anmeldung einbezogen). Passiert das Fahrzeug nach einer zurückgelegten Wegstrecke den Streckenübergabepunkt B, so erfolgt in einem Schritt S2 eine erneute Ermittlung des Fahrzeuggewichts FGB und/oder der Fahrzeugmasse durch die Steuereinheit SCX. Zusätzlich ermittelt das Fahrzeug in einem Schritt S3 das Gewicht GBS und/oder die Masse verbrauchter Betriebsstoffe (z.B. Kraftstoff, Scheibenwischwasser, Kondenswasser) auf der Sektion X vom Streckenübergabepunkt A zum Streckenübergabepunkt B. Anschließend wird in einem Schritt S4 durch Subtraktion der beiden Fahrzeuggewichte FGA, FGB oder -massen sowie des Gewichts GBS und/oder der Masse der verbrauchten Betriebsstoffe das Gewicht GVL verlorener Ladung berechnet.

### GVL=FGA-FGB-GBS

In einem Schritt S5 überprüft die Steuereinheit SCX, ob dieses Gewicht GVL verlorener Ladung, beispielsweise aufgrund von Toleranzen, einen gewissen Schwellwert SW übersteigt, und gibt in diesem Fall eine Warnung an die Steuerzentrale CC. Diese hat nun die Möglichkeit, den Straßenverkehr für die betroffene Sektion X zu sperren, in dem sie entweder Ampeln (die zu Beginn der Sektion X montiert sind) ansteuert oder die Fahrzeuge direkt vor dieser Gefahr warnt.

Das Verfahren wird für die anderen Sektionen Y, Z in analoger Weise durch deren jeweils zugeordnete Steuereinheiten SCY, SCZ durchgeführt.

### Bezugszeichenliste

- A, B, C, D: Streckenübergabepunkt
- CC: Steuerzentrale
- FGA, FGB: Fahrzeuggewicht
- GBS: Gewicht verbrauchter Betriebsstoffe
- GVL: Gewicht verlorener Ladung, Differenz
- SCX, SCY, SCZ: Steuereinheit
- SW: Schwellwert
- S1, S2, S3, S4, S5: Schritt
- X, Y, Z: Sektion

## Patentansprüche

1. Verfahren zur Detektion von mittels eines Fahrzeugs transportiertem, verlorenem Ladungsgut, wobei der Beladungszustand des Fahrzeugs überwacht wird, wobei eine von dem Fahrzeug zurückzulegende Wegstrecke in mehrere, sich an jeweiligen Streckenübergabepunkten (A, B, C, D) übergangslos aneinander anschließende Sektionen (X, Y, Z) unterteilt wird, wobei bei jedem Streckenübergabepunkt (A, B, C, D) eine Steuereinheit (SCX, SCY, SCZ) aktiviert wird, die ein Fahrzeuggewicht (FGA, FGB) und separat das Gewicht der vom Fahrzeug verbrauchten Betriebsstoffe (GBS) ermittelt, wobei eine Differenz (GVL) aus dem Fahrzeuggewicht (FGA) des vorherigen Streckenübergabepunkts (A, B, C, D), dem Fahrzeuggewicht (FGB) des aktuellen Streckenübergabepunkts (A, B, C, D) und dem Gewicht der verbrauchten Betriebsstoffe (GBS) gebildet wird, wobei ein Verlust von Ladegut erkannt und die zugehörige Sektion (X, Y, Z) identifiziert wird, wenn die Differenz (GVL) größer ist als ein vorbestimmter Schwellwert (SW).

2. Verfahren nach Anspruch 1,
**dadurch gekennzeichnet, dass** die Einteilung in Sektionen (X, Y, Z) manuell von einem Fahrer oder einem Flottenverantwortlichen oder durch ein mit einem Logistikprogramm ausgestattetes Backend, beispielsweise eine Cloud, oder durch ein Frontend, beispielsweise einen Bordcomputer, vorgenommen wird.

3. Verfahren nach Anspruch 2,
**dadurch gekennzeichnet, dass** das Backend oder das Frontend mit der Steuereinheit (SCX, SCY, SCZ) zur Ermittlung der Gewichte (FGA, FGB, GBS) kommuniziert.

4. Verfahren nach einem der vorhergehenden Ansprüche,
**dadurch gekennzeichnet, dass** die Einteilung in Sektionen (X, Y, Z) in Abhängigkeit von einer Topographie, einem Streckenverlauf und/oder einer aktuellen Verkehrssituation erfolgt.

5. Verfahren nach einem der vorhergehenden Ansprüche,
**dadurch gekennzeichnet, dass** das Fahrzeuggewicht (FGA, FGB) in jeweiligen externen Stationen oder mittels einer fahrzeugeigenen Messung ermittelt wird.

6. Verfahren nach einem der vorhergehenden Ansprüche,
**dadurch gekennzeichnet, dass** der Verlust von Ladegut und die zugehörige Sektion (X, Y, Z) an eine übergeordnete Steuerzentrale (CC) und/oder an einen Fahrer des Fahrzeugs gemeldet werden.

7. Verfahren nach Anspruch 6,
**dadurch gekennzeichnet, dass** von der Steuerzentrale (CC) Maßnahmen zur Regelung des Verkehrs auf der jeweiligen identifizierten Sektion (X, Y, Z) und zur Bergung des Ladeguts eingeleitet werden.

8. Verfahren nach Anspruch 7,
**dadurch gekennzeichnet, dass** zur Regelung des Verkehrs Ampeln auf der Sektion (X, Y, Z) angesteuert und/oder die Sektion (X, Y, Z) passierende Fahrzeuge vor der Gefahr herumliegenden Ladeguts gewarnt werden.

9. System zur Detektion von mittels eines Fahrzeugs transportiertem, verlorenem Ladungsgut, wobei Mittel zur Überwachung des Beladungszustands des Fahrzeugs vorgesehen sind, wobei das System dazu konfiguriert ist, eine von dem Fahrzeug zurückzulegende Wegstrecke in mehrere, sich an jeweiligen Streckenübergabepunkten (A, B, C, D) übergangslos aneinander anschließende Sektionen (X, Y, Z) zu unterteilen oder eine solche Unterteilung zu berücksichtigen, wobei für jede Sektion (X, Y, Z) eine jeweilige Steuereinheit (SCX, SCY, SCZ) vorgesehen ist, die dazu konfiguriert ist, bei jedem Streckenübergabepunkt (A, B, C, D) aktiviert zu werden und ein Fahrzeuggewicht (FGA, FGB) und separat das Gewicht der vom Fahrzeug verbrauchten Betriebsstoffe (GBS) zu ermitteln, eine Differenz (GVL) aus dem Fahrzeuggewicht (FGA) des vorherigen Streckenübergabepunkts (A, B, C, D), dem Fahrzeuggewicht (FGB) des aktuellen Streckenübergabepunkts (A, B, C, D) und dem Gewicht der verbrauchten Betriebsstoffe (GBS) zu bilden, und einen Verlust von Ladegut zu erkennen und die zugehörige Sektion (X, Y, Z) zu identifizieren, wenn die Differenz (GVL) größer ist als ein vorbestimmter Schwellwert (SW).

## Claims

1. A method for the detection of lost cargo transported by means of a vehicle, the loading status of the vehicle being monitored, a stretch of route to be covered by the vehicle being divided into a plurality of sections (X, Y, Z) that each run seamlessly into the next at transition points (A, B, C, D), a control unit (SCX, SCY, SCZ) that determines a vehicle weight (FGA, FGB) and, separately, the weight of the fuel consumed (GBS) by the vehicle being activated at each transition point (A, B, C, D), a difference (GVL) being calculated from the vehicle weight (FGA) of the previous transition point (A, B, C, D), the vehicle weight (FGB) of the current transition point (A, B, C, D) and the weight of the consumed fuel (GBS), and a loss of cargo being established and the associated section (X, Y, Z) being identified where the difference (GVL) is greater than a predetermined threshold value (SW).

2. A method according to claim 1,
**characterised in that** the division into sections (X, Y, Z) is carried out manually by a driver or a fleet manager or by a backend system equipped with a logistics program, e.g. a cloud, or by a frontend system, e.g. an on-board computer.

3. A method according to claim 2,
**characterised in that** the backend system or the frontend system communicates with the control unit (SCX, SCY, SCZ) in order to determine the weights (FGA, FGB FGC).

4. A method according to any one of the preceding claims,
**characterised in that** the division into sections (X, Y, Z) takes place dependant on a topography, a stretch of route and/or a current traffic situation.

5. A method according to any one of the preceding claims,
**characterised in that** the vehicle weight (FGA, FGB) is determined in external stations or by means of in-vehicle measurement.

6. A method according to any one of the preceding claims,
**characterised in that** the loss of cargo and the associated section (X, Y, Z) are reported to a higher-level control centre (CC) and/or to a driver of the vehicle.

7. A method according to claim 6,
**characterised in that** measures to regulate the traffic on the section (X, Y, Z) identified and to recover the cargo are initiated by the control centre (CC).

8. A method according to claim 7,
**characterised in that**, in order to regulate traffic, traffic lights on the section (X, Y, Z) are triggered and/or that vehicles using the section (X, Y, Z) are warned of the risk of lost cargo lying on the road.

9. A system for the detection of lost cargo transported by means of a vehicle, the loading status of the vehicle being monitored, the system being configured to divide a stretch of route to be covered by the vehicle into a plurality of sections (X, Y, Z) that each run seamlessly into the next at transition points (A, B, C, D) and to take such a division into account, there being provided for each section (X, Y, Z) a control unit (SCX, SCY, SCZ) that is configured to be activated at each transition point (A, B, C, D) and to determine a vehicle weight (FGA, FGB) and, separately, the weight of the fuel (GBS) consumed by the vehicle, to calculate a difference (GVL) from the vehicle weight (FGA) for the previous route transition point (A, B, C, D), the vehicle weight (FGB) for the current route transition point (A, B, C, D) and the weight of the consumed fuel (GBS) and to establish the loss of cargo and identify the associated section (X, Y, Z) where the difference (GVL) is greater than a predetermined threshold value (SW).

## Revendications

1. Procédé de détection de marchandises perdues transportées par un véhicule, dans lequel l'état de chargement du véhicule est surveillé, dans lequel un trajet à parcourir par le véhicule est divisé en plusieurs sections (X, Y, Z) qui se succèdent en continu au niveau de chacun des points de transfert respectifs (A, B, C, D), dans lequel à chaque point de transfert (A, B, C, D) est activée une unité de commande (SCX, SCY, SCZ) qui détermine le poids du véhicule (FGA, FGB) et, séparément, le poids des consommables utilisés par le véhicule (GBS), dans lequel est générée une différence (GVL) entre le poids du véhicule (FGA) au point de transfert précédent (A, B, C, D), le poids du véhicule (FGB) au point de transfert actuel (A, B, C, D) et le poids des consommables (GBS) utilisés, dans lequel une perte de chargement est détectée et la section correspondante (X, Y, Z) est identifiée lorsque la différence (GVL) est supérieure à une valeur seuil prédéfinie (SW).

2. Procédé selon la revendication 1,
**caractérisé en ce que** la division en sections (X, Y, Z) est effectuée manuellement par un conducteur ou un responsable de flotte, ou par un programme dorsal équipé d'un programme logistique, par exemple un nuage, ou par un logiciel frontal, par exemple un ordinateur de bord.

3. Procédé selon la revendication 2,
**caractérisé en ce que** le programme dorsal ou le logiciel frontal communique avec l'unité de commande (SCX, SCY, SCZ) pour déterminer les poids (FGA, FGB, GBS).

4. Procédé selon l'une quelconque des revendications précédentes,
**caractérisé en ce que** la division en sections (X, Y, Z) s'effectue en fonction d'une topographie, d'un tracé de trajet et/ou de la situation actuelle de la circulation routière.

5. Procédé selon l'une quelconque des revendications précédentes,
**caractérisé en ce que** le poids du véhicule (FGA, FGB) est indiqué dans chacune des stations externes ou au moyen d'un système de mesure embarqué.

6. Procédé selon l'une des revendications précédentes,
**caractérisé en ce que** la perte de chargement et la section correspondante (X, Y, Z) sont signalées à un centre de contrôle (CC) de niveau supérieur et/ou au conducteur du véhicule.

7. Procédé selon la revendication 6,
**caractérisé en ce que** le centre de contrôle (CC) met en œuvre des mesures visant à réguler la circulation routière sur chaque section identifiée (X, Y, Z) et à récupérer les marchandises.

8. Procédé selon la revendication 7,
**caractérisé en ce que**, pour réguler la circulation routière, des feux de signalisation sont activés sur la section (X, Y, Z) et/ou les véhicules circulant sur la section (X, Y, Z) sont avertis du danger que représente le chargement éparpillé sur la chaussée.

9. Système de détection de marchandises perdues transportées par un véhicule, dans lequel il est prévu des moyens permettant de surveiller l'état de chargement du véhicule, le système étant configuré pour diviser un trajet que le véhicule doit parcourir en plusieurs sections (X, Y, Z) qui se succèdent en continu au niveau de points de transfert respectifs (A, B, C, D) et de prendre en compte une telle division, dans lequel pour chaque section (X, Y, Z) une unité de commande respective (SCX, SCY, SCZ) est configurée pour être activée à chaque point de transfert (A, B, C, D) et pour déterminer un poids du véhicule (FGA, FGB) ainsi que, séparément, le poids des consommables utilisés par le véhicule (GBS), pour générer une différence (GVL) entre le poids de véhicule (FGA) provenant du point de transfert précédent (A, B, C, D), le poids du véhicule (FGB) provenant du point de transfert actuel (A, B, C, D) et le poids des consommables (GBS) utilisées, et pour reconnaître une perte de marchandises et pour identifier la section correspondante (X, Y, Z) lorsque la différence (GVL) est supérieure à la valeur seuil prédéterminée (SW).
